# EUROPÄISCHE PATENTANMELDUNG

(11) **EP 4 722 547 A1**
(43) Veröffentlichungstag der Anmeldung: **08.04.2026**
(21) Anmeldenummer: 24204555.7
(22) Anmeldetag: 03.10.2024
(51) Int. Cl.: F16B 25/00, F16B 25/10

(54) **SELBSTBOHRENDE UND GEWINDEFURCHENDE SCHRAUBE AUS EDELSTAHL SOWIE VERFAHREN ZU DEREN HERSTELLUNG**

(71) Anmelder: SFS Group International AG, 9435 Heerbrugg (CH)
(72) Erfinder: Andersag, Markus, 6890 Lustenau (AT); Federer, Tim, 9435 Heerbrugg (CH)

(57) **Zusammenfassung**

Eine selbstbohrende, gewindefurchende Schraube (100) aus Edelstahlmaterial wird beschrieben, welche folgende, ineinander übergehende bzw. aneinander angrenzende Funktionsabschnitte besitzt: Eine Schraubenspitze (110), ein Kegelstumpf (120) mit abschliessender Kuppe (130), an den sich ein zylindrischer, zumindest abschnittsweise ein Gewinde tragenden Schaft anschliesst. Ein Kopf (160) mit einem Kraftangriff schliesst sich am anderen Schaftende an. Auf dem Mantel des Kegelstumpfs (120) ist eine gewindeähnliche Reliefstruktur aus längsausgedehnten, bogenförmigen Rippen (201, ...205) angeordnet. Diese Rippen zeichnen sich dadurch aus, dass sie, in Längsrichtung betrachtet, hintereinander, aber voneinander beabstandet vorliegen und einer virtuellen helikalen Kurve folgen.

Eine solche Schraube kann vollständig aus einem Edelstahlmaterial ohne einen dem Herstellprozess nachgelagerten, die Materialhärte verbessernden Wärmebehandlungsprozess hergestellt werden, indem am ersten Längsende eines schaftförmigen Rohlings durch Aufstauchen ein Schraubenkopf mittels Kaltumformung geformt wird. Die Schraubenspitze wird am zweiten Längsende des Rohlings mit der speziellen, gewindeähnlichen Reliefstruktur aus längsausgedehnten, bogenförmigen Rippen geformt, wobei diese Form durch eine quer zur Längsachse erfolgende Zwickbewegung zwischen zwei gegenüberliegenden Werkzeugbacken erreicht wird. Überstehende Materialfahnen werden während eines nachfolgenden Gewinderollvorgangs auf dem Schaft abgeschert.

## Beschreibung

Die vorliegende Erfindung befasst sich mit Befestigern, speziell Schrauben aus Edelstahl, die selbstbohrend bzw. selbstfurchend arbeiten. Ebenso wird ein Herstellverfahren dazu geschildert.

### HINTERGRUND

Als Stahl wird üblicherweise eine Eisen-Kohlenstoff-Legierung bezeichnet mit einem Kohlenstoff-Anteil von höchstens 2%. Als Carbonstahl bzw. unlegierter Stahl werden solche Varianten bezeichnet, die nur geringe Verunreinigungen bzw. keine gezielt zugesetzten Legierungsbestandteile wie Chrom, Nickel, Kupfer, Mangan oder Silizium aufweisen. Nichtrostende Stähle, vielfach auch als Edelstähle oder präziser als korrosionsarme Stähle bezeichnet, zeichnen sich durch einen Legierungsanteil von >10% Chrom und weniger als 1.2% Kohlenstoff aus.

Wegen der Einlagerung von Kohlenstoff in die Matrix des Stahl-Gitters lässt sich Carbonstahl grundsätzlich besser härten als korrosionsarme Stähle. Diese Härtung wird üblicherweise durch Härteverfahren (Wärmebehandlung, Einsatzhärten wie Carbonitrieren) oder Kaltumformungsprozesse erzielt.

Unter den korrosionsarmen Stählen sind die gebräuchlichsten jene mit den Legierungsbestandteilen Chrom und Nickel wie die Stahlsorten 1.4301 (V2A oder A2) bzw. 1.4401 (V4A oder A4). Für diese Stähle mit spezifizierter Zusammensetzung existieren Normen, so dass diese Sorten mit vergleichbaren Eigenschaften aus verschiedenen Quellen bezogen werden können. Diese Stähle werden auch als austenitisch bezeichnet, weil die Legierungsbestandteile Ni, C, Mn und N bei der Herstellung die Austenitphase im Stahl stabilisieren.

Duplexstahl ist ein Stahl mit zweiphasigem Gefüge, das aus einer Ferrit-Matrix mit Inseln aus Austenit besteht. Duplexstahl weist, im Vergleich zu rein austenitischen Stählen einen geringeren Nickel-Gehalt auf, was dazu führt, dass bei Raumtemperatur nicht das gesamte Gefüge austentitisch wird. Beispiele hierfür sind die Sorten 1.4462 bzw. 1.4362.

Die Herstellung von Befestigern bzw. Schrauben rein aus Edelstählen ist bekannt; die Durchdringungsfähigkeit von Stahl mit entsprechenden (Selbst-)Bohrschrauben bzw. loch- und gewindefurchenden Schrauben ist jedoch begrenzt. Es besteht daher ein Bedarf an Befestigern, insbesondere Schrauben bzw. Selbstbohrschrauben und gewindefurchende Selbstbohrschrauben, welche vollständig aus einer korrosionsfesten Stahlsorte herstellbar sind und dennoch Stahlbleche mit >1.5mm Stärke ohne Vorbohren durchdringen können.

### STAND DER TECHNIK

Die Offenlegungsschrift DE 29 29 179 beschreibt eine korrosionsbeständige, selbstbohrende und gewindeformende Schraube aus einem rostfreien austenitischen Stahlmaterial (nach US Norm Serie 300). Die Verfahrensschritte bei der Herstellung umfassen das Aufstauchen eines Kopfes am Ende eines Drahtabschnitt des genannten Materials und nachfolgend, am entgegengesetzten Ende, die Ausbildung einer Bohrspitze durch einen Zwickvorgang mit definierter maximaler Schliessgeschwindigkeit der Zwickbacken. Dadurch wird die austenitische Struktur der Bohrspitze in eine martensitische überführt. Die Schrift empfiehlt zusätzlich, den Pressrohling auf Temperaturen unter 0°C zu kühlen, z.B. durch Trockeneis.

Die Schrift EP 2 080 572 beschreibt die Herstellung eines hochfesten Befestigers aus austenitischem Stahl der 300er Serie (gemäss US-Norm), indem in einem ersten Arbeitsschritt ein Schaftrohling um 15% im Durchmesser durch Kaltumformung verkleinert wird. Danach werden Kopf und Spitze ebenfalls durch Kaltumformung hergestellt. Das Gewinde wird durch ein Rollverfahren auf dem Schaft erzeugt. Weiter wird vorgeschlagen, bei dem kaltumgeformten Befestiger durch Nachbehandlung bzw. Beschichtung die Rostbeständigkeit zu verbessern.

In der Schrift DE 2 103 053 bzw. US 3,683,436 wird die Herstellung einer Bohrschraube mit gezwickter Bohrspitze beschrieben. Der Drahtrohling wird hierbei an einem Ende durch Fliesspressen in seinem Durchmesser verringert und anschliessend durch Zwicken in seine Endform gebracht.

Die Herstellung von Gewinden auf dem Schaft und/oder der Spitze einer Schraube durch Rollen oder Walzen ist allgemeiner Stand der Technik.

Diesen, wie auch anderen Schriften im Stand der Technik ist gemein, dass die Auslegung der Spitzen entscheidend ist für die Einsatzfähigkeit der Schrauben. Sehr häufig werden bekannte Spitzenformen mit modifizierten Herstellverfahren kombiniert. In der vorliegenden Erfindung wird dagegen eine neue Auslegung einer Spitze für eine Schraube des vorliegenden Typs vorgeschlagen.

### DEFINITIONEN

Als Befestiger wird in dieser Schrift ein mechanisches Bauteil bezeichnet, mit dessen Hilfe zwei Komponenten miteinander dauerhaft verbunden werden können (lösbar wie auch unlösbar). Als Schraube ist spezifisch ein Befestiger gemeint, der einen im Wesentlichen längsausgedehnten Schaft aufweist mit zylindrischem oder zylinderähnlichem Querschnitt. An einem Längsende des Schaftes befindet sich ein Kraftangriff, der als Kopf mit Kraftangriffsflächen gestaltet sein kann. Am entgegengesetzten Schaftende befindet sich die Spitze der Schraube. Mit Spitze ist hierbei der Längsabschnitt der Schraube gemeint, wo der Zylinderabschnitt bzw. Schaft endet und die Schraube sich bis zu ihrem Abschluss verjüngt.

Der Schaft ist zumindest in einem Teilabschnitt mit einem Gewinde versehen, es kann ein- oder mehrgängig sein mit konstanter oder veränderlicher Steigung. Die Spitze kann grundsätzlich als Bohrspitze mit Schneidkanten; als stumpfkonische, gewindelose Verdrängerspitze oder als spitzkonische, selbstbohrende und gewindefurchende Spitze (Gewindespitze) ausgebildet sein. Je nach Anwendungszweck kann das Gewinde vom Schaft bis auf den Konus bzw. an die Schraubenspitze reichen.

Als Bohrschraube wurde ursprünglich nur eine Schraube mit einer Bohrspitze bezeichnet, deren Schneidkanten beim Setzen spanend ihr Loch in die zu verbindenden Bauteile schneiden. Heutzutage werden als Selbstbohrschrauben all jene Schrauben bezeichnet, die vor dem Setzen grundsätzlich kein Vorbohren erfordern. Als spanlos werden dabei Spitzenformen von Schrauben charakterisiert, die das Unterlagsmaterial durchdringen können, ohne abrasiv Späne zu erzeugen. Gewindefurchend meint, dass eine Schraube ihr Haltegewinde beim Setzvorgang selbst erzeugt. Selbstbohrschrauben sind immer gewindefurchend, gewindefurchende Schrauben müssen jedoch nicht selbstbohrend sein.

Unter "Kegel" wird hier der bekannte geometrische Körper verstanden, der entsteht, wenn alle Punkte der Begrenzungslinie eines in einer Ebene liegenden Flächenstücks mit einem Punkt im Raum verbunden werden. Ist das Flächenstück (=Grundfläche) eine Kreisscheibe, spricht man von einem Kreiskegel und der Punkt im Raum ist der Scheitel des Kreiskegels. Durchstösst das Lot vom Scheitel auf die Ebene exakt den Mittelpunkt der Kreisscheibe / Grundfläche, spricht man von einem geraden Kreiskegel. Das Lot bildet in diesem Fall auch die zentrale Rotationsachse des Kreiskegels. Die Aussenfläche eines Kreiskegels besteht somit aus der Grundfläche und der Mantelfläche (Mantel).

Schneidet man parallel zur Grundfläche einen kleineren Kegel ab, entsteht ein Kegelstumpf. Die resultierende Schnittfläche heisst Deckfläche; die Oberfläche des Kegelstumpfs besteht also aus Grundfläche, Deckfläche und Mantelfläche. Die zentrale Mittenachse oder Rotationsachse verläuft damit lotrecht durch den Kreismittelpunkt von Deckfläche und Grundfläche. Als Kegelstumpfhälfte wird in dieser Offenbarung der Körper verstanden, der entsteht, wenn man einen Kegelstumpf entlang der zentralen Mittelachse halbiert, so dass eine Schnittebene entsteht.

Wenn in dieser Offenbarung die Formgebung eines Gegenstandes mit den o.a. Begriffen beschrieben wird, ist dem Fachmann klar, dass ein technisches Produkt niemals im mathematisch perfekten Sinne diese geometrische Form aufweisen wird. Je nach Produktionsverfahren wird ein Produkt der geometrischen Form ähnlich sein, im Rahmen von Herstellgenauigkeit und Werkzeuggestaltung. Konkret ist eine mathematisch als Kegelstumpf beschriebene Form in einer Massenproduktion technisch nicht ideal oder perfekt umsetzbar. Wenn im Rahmen der Beschreibung der Erfindung von Kegelstumpf die Rede ist, seien aber auch vom Ideal abweichende, grundsätzlich kegelstumpfförmige Formen mitumfasst.

Unter Gewinde versteht man im üblichen Sinne eine längsausgedehnte, fortlaufend wendelartige Erhebung auf einer (üblicherweise) zylinderförmigen Fläche. Im technischen Kontext einer Schraube oder einer Mutter spricht man von einem Gewindegang. Das Gewinde bildet also auf dem Grundkörper eine Spirale oder Helix. Eingängige Gewinde bestehen aus einer einzelnen Helix. Mehrgängige Gewinde umfassen mehrere Gewindegänge bzw. Spiralen, die so ineinander greifend angeordnet sind, dass die Gewindegänge parallel verlaufen.

Der Querschnitt eines Gewindeganges ist meistens dreieckig oder trapezförmig ausgelegt, kann aber von diesen üblichen Vorgaben abweichen. Die länglichen Seitenflächen des Gewindes werden als Flanken bezeichnet, die nach oben abschliessende Längskante des Gewindeganges als Gewindekante. Sie weist häufig einen scharfen Grat auf, der das Einschneiden in das Werkstück erleichtert. Die Gewindehöhe wird in der Regel abhängig vom Material des Werkstücks so gewählt, dass die Schraube mit beherrschbarem Drehmoment gesetzt werden kann, einen guten Halt bietet und das Material des Werkstücks nicht sprengt.

Die Gesamtheit des Gewindeganges bildet daher bei einer Schraube ein Relief bzw. eine Reliefstruktur auf der Mantelfläche (und ggf. der Spitze) ab. In der vorliegenden Erfindung wird der Begriff "Rippe" sinnbildlich für einen Abschnitt eines Gewindegangs verwendet, der auf der Mantelfläche einer Schraube ausgeprägt ist, die Gesamtheit der Rippen bildet damit die Reliefstruktur.

Im Stand der Technik sind sowohl ununterbrochene wie auch unterbrochene Gewindegänge bekannt. Ferner ist es grundsätzlich bekannt, die Form bzw. Dimensionen des Querschnitts eines Gewindeganges bei einem Schraubentyp je nach Aufgabenbereich zu verändern. Weiterhin sind ein- bzw. mehrgängige Gewinde bekannt.

Schrauben werden üblicherweise durch Kaltumformverfahren hergestellt. Verfahren der Kaltumformung sind das Rollen, das Stauchen, Ziehen und Fliesspressen. Technisch versteht der Fachmann unter Kaltumformung ein plastisches Umformen von Metallen unterhalb der Rekristallisationstemperatur, was bekanntermassen zu einer (erwünschten) Kaltverfestigung des umgeformten Materials führt. Zwicken bezeichnet eine spezielle Art der Kaltumformung, bei der - im Kontext dieser Offenbarung - ein Längsende eines (Schrauben-) Rohlings durch zwei zulaufende Zwickbacken in die gewünschte Form (z. B. einer Bohrspitze) gepresst wird.

### BESCHREIBUNG DER ERFINDUNG

Die Erfindung befasst sich mit einer selbstbohrenden, gewindefurchenden Schraube aus Edelstahlmaterial. Mit Edelstahlmaterial seien insbesondere die Stähle mit den Materialnummern 1.4301, 1.4551 oder 1.4307 (V2A), bzw. 1.4401, 1.4571 oder 1.4404 (V4A) oder 1.4462, 1.4362, 1.4410 oder 1.4501 (Duplex) gemeint.

Der grundsätzliche Aufbau einer solchen Schraube beinhaltet folgende, ineinander übergehende bzw. aneinander angrenzende Funktionsabschnitte. An einem ersten Ende befindet sich eine Schraubenspitze, die hier einen Kegelstumpf umfasst, mit einer diesen Kegelstumpf an seinem spitzen Ende abschliessenden Kuppe. Mit Kuppe ist, soweit nicht genauer spezifiziert, ein abgerundeter Abschluss gemeint (im Rahmen der technischen Machbarkeit bzw. Herstellbarkeit). An das breite Ende des Kegelstumpfs schliesst ein im Wesentlichen zylindrischer Schaft an, der zumindest abschnittsweise ein Gewinde trägt. Es folgt ein Kopf mit einem Kraftangriff. Der Typ des Kraftangriffs wird durch den Einsatzzweck definiert und wird vom entsprechenden Fachmann aus dem Stand der Technik ausgewählt.

Mit Blick auf die vorliegende Erfindung ist auf dem Mantel des Kegelstumpfs eine gewindeähnliche Reliefstruktur aus längsausgedehnten, bogenförmigen Rippen angeordnet. Rippen werden hier als Sonderform von einzelnen Gewindeabschnitten beschrieben und erfüllen zumindest folgende Kriterien: Sie sind (a) in Längsrichtung (Verlaufsrichtung) betrachtet hintereinander, aber (b) voneinander beabstandet angeordnet und folgen einer virtuellen helikalen Kurve. Die Kurve wird als "virtuell helikal" bezeichnet, weil der Verlauf durch die "gestrichelten" Rippen vorgezeichnet ist, aber nicht durchgängig.

Es hat sich bewährt, die bogenförmigen Rippen auf der Mantelfläche je einer Kegelstumpfhälfte so anzuordnen, dass die rippenfreien Bereiche in zwei Übergangsstreifen vorliegen bzw. angeordnet sind. Eine Kegelstumpfhälfte entsteht durch die gedankliche Halbierung eines Kegelstumpfs entlang seiner zentralen Mittenachse. Die rippenfreien Übergangsstreifen sind somit um 180° versetzt auf der Mantelfläche des Kegelstumpfs angeordnet, liegen also auf der Mantelfläche einander gegenüber. Die Übergangsstreifen erstrecken sich zu beiden Seiten der Trennlinie oder gedachten Naht zwischen den Kegelstumpfhälften. Ihre Breite (und damit der Längsabstand zwischen zwei Rippen) wird je nach Herstellverfahren und Einsatzzweck der schraube bestimmt. Die Form des Übergangsstreifen kann, der sich verjüngenden Form des Kegels folgend, trapezoidal oder auch rechteckig gewählt werden.

Es ist von Vorteil, wenn die bogenförmigen Rippen in Richtung auf den Übergangsstreifen jeweils einen Ein- bzw. Auslauf aufweisen. Ein- bzw. Auslauf bedeutet, dass die Höhe der Rippen gegenüber der Mantelfläche des Konus auf Null zurückgeht.

Die Reliefstruktur der bogenförmigen Rippen kann vom Kegelstumpf auf die Kuppe weitergeführt werden bzw. dort auslaufen. Für bestimmte Einsatzzwecke kann es vorteilhaft sein, auch auf der Kuppe bereits gewindeähnliche Strukturen vorzusehen. Der Spitzenwinkel des Kegelstumpfes wird vorteilhaft zwischen 25° bis 40° gewählt, bevorzugt ca. 35°. Der Kegelstumpf wird dabei idealerweise so ausgelegt, dass seine Deckfläche einen Durchmesser von 0.3mm bis 0.5mm besitzt.

Bei der vorliegenden Erfindung wird bevorzugt der Querschnitt aller Rippen mit Ausnahme der Ein- bzw. Ausläufe kuppelförmig gestaltet, mit gleichbleibender Höhe relativ zur Mantelfläche des Kegelstumpf. Die Breite der Rippen mit Ausnahme der Ein- bzw. Ausläufe beträgt vorteilhaft am Übergang zur Mantelfläche zwischen 0.3mm bis 0.6mm. Die Höhe der Rippen wird (mit Ausnahme der Ein- bzw. Ausläufe) vorteilhaft zwischen 0.15mm bis 0.3mm gewählt.

Die Steigung der virtuellen helikalen Kurve auf dem Kegelstumpf wird bevorzugt gleichförmig, konstant gewählt. Weiterhin vorteilhaft ist es, wenn die Steigung der virtuellen helikalen Kurve auf dem Kegelstumpf der Steigung des Gewindes auf dem Schaft entspricht.

In einer weiteren Ausführungsform wird man die Rippen auf dem Kegelstumpf so anordnen, dass der Winkel zwischen Ein-bzw. Auslauf, bezogen auf die Mittenachse des Kegelstumpfs zwischen 100° und 170° beträgt. Da jede Rippe auf einer Kegelstumpfhälfte angeordnet ist, ergibt sich aus dieser Angabe, dass die Winkeldifferenz zu 180° auf den Übergangsstreifen entfallen wird. Die Auslegung der Rippenlänge wird somit die Breite der Übergangsstreifen beeinflussen oder - je nach Design - auch umgekehrt.

Je nach Einsatzgebiet der Schraube können auf dem Mantel des Kegelstumpfs zwei oder mehr gewindeähnliche Reliefstrukturen mit separaten, virtuellen helikalen Kurven angelegt sind in der Art eines doppel- bzw. mehrgängigen Gewindes.

Es hat sich gezeigt, dass die Kuppe, die an der Schraubenspitze den Kegelstumpf abschliesst, vorteilhaft eine kugelsegment-ähnliche Form aufweist. Der Radius der Kuppe kann dazu beispielsweise 0.3 bis 0.5mm betragen.

In einer weitere nützlichen Variante kann der Kegelstumpf irregulär ausgebildet sein mit einer kreisförmigen Grundfläche und einer elliptischen Deckfläche. Zwischen Deckfläche und Grundfläche geht also die Deckflächen-Ellipse in die Kreisfläche der Grundfläche über. Mit dem Begriff "irregulär" sei aber auch eine Ausführung mitumfasst, wo eine kreisförmige Grundfläche in eine Ellipsenform übergeht und an der Deckfläche wieder zurück in eine Kreisfläche.

Bei all den genannten Varianten von regulärem oder irregulärem Kegelstumpf wird jedoch die Schnittebene zwischen den beiden Kegelstumpfhälften stets so gewählt, dass sie die kurzen Halbachsen der Ellipse einschliesst. Für die Anordnung der Rippen gelten die bereits genannten Vorgaben bzw. Möglichkeiten. Die an die Deckfläche anschliessende Kuppe nimmt jeweils die Form der Deckfläche auf und schliesst ebenso abgerundet ab.

Bevorzugt werden die Rippen einen Querschnitt aufweisen, der im Wesentlichen (im Rahmen der Herstellbarkeit) einen Halbkreis, ein Kreissegment bzw. einen Teil einer Ellipse bildet.

Die vorgängig strukturell beschriebene Schraube lässt sich durch ein Kaltumformverfahren vollständig aus einem Edelstahlmaterial herstellen, ohne einen dem Herstellprozess nachgelagerten, die Materialhärte verbessernden Wärmebehandlungsprozess anzuwenden. Dies kann mit folgenden Schritten geschehen:
A: Bereitstellen eines schaftförmigen Rohlings als Drahtabschnitt aus einem Edelstahlmaterial; B: Aufstauchen eines Schraubenkopfs mittels Kaltumformung an einem ersten Längsende des Rohlings; C: Formen einer Schraubenspitze am zweiten Längsende des Rohlings, wobei die Schraubenspitze einen Kegelstumpf mit abschliessender Kuppe umfasst und eine gewindeähnliche Reliefstruktur aus längsausgedehnten, bogenförmigen Rippen auf dem Kegelstumpf aufweist. Diese Formgebung kann durch eine quer zur Längsachse (der Schraube) erfolgende Zwickbewegung zwischen zwei gegenüberliegenden Werkzeugbacken erreicht werden. Anschliessend werden in Schritt D an der Schraubenspitze verbliebene, überstehende Materialfahnen (vom Zwickprozess) während eines nachfolgenden Gewinderollvorgangs auf dem Schaft abgeschert.

Das Verfahren kann verfeinert werden, indem vor Schritt C eine im Wesentlichen kegelförmige Spitze am zweiten Längsende des Rohlings vorgeformt wird. Dies kann durch eine quer zur Längsachse erfolgende Zwickbewegung zwischen zwei gegenüberliegenden Werkzeugbacken erfolgen. Vorteilhaft wird zwischen dem vorbeschriebenen Vorformen und dem Verfahrensschritt Schritt C ein Abkühlen des Rohlings vorgenommen. Das Abkühlen kann aktiv mit Fluiden (Tauchen, Benetzen, Gasstrom) oder passiv durch Abkühlen-Lassen erfolgen.

Für das Verfahren kommen bevorzugt Edelstähle der Normen 1.4301, 1.4551 oder 1.4307 (V2A), bzw. 1.4401, 1.4571 oder 1.4404 (V4A) oder 1.4462, 1.4362, 1.4410 oder 1.4501 (Duplex) in Frage.

### BESCHREIBUNG DER FIGUREN

Die Erfindung wird nun mit Bezug auf die begleitenden Zeichnungen erläutert.

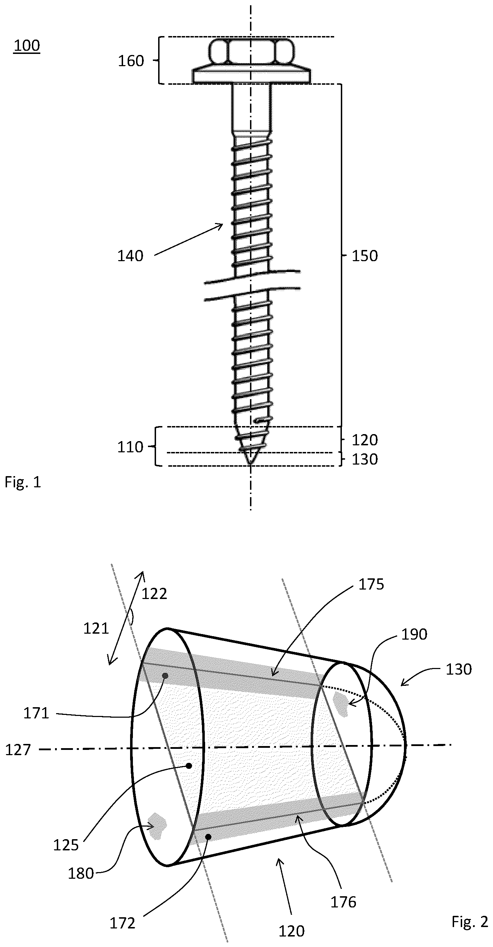

Figur 1 zeigt in Seitenansicht exemplarisch eine Schraube 100 mit einem üblichen Aufbau (in der Zeichnung von oben nach unten) mit einem Kopf 160, gefolgt von einem im Wesentlichen zylindrischen Schaft 150 mit einem Gewinde 140. Der Schaft geht über in eine Schraubenspitze 110, die sich unterteilen lässt in einen sich verjüngenden Kegelstumpf 120 mit einer Kuppe 130 als Abschluss.
Figur 2 dient insbesondere der Erläuterungen der geometrischen Grundformen und entsprechender Begriffe, wie sie in der vorliegenden Beschreibung verwendet werden. Die Figur zeigt einen Kegelstumpf 120 mit anschliessender Kuppe 130, die an die Deckfläche 190 des Kegelstumpfs 120 anschliesst. Der Radius der Kuppe hier ist exemplarisch dargestellt, es können andere, technisch sinnvolle Formen von Kuppen Verwendung finden. 127 bezeichnet die Mittenachse von Kegelstumpf 120 und Kuppe 130, sie ist auch die Achse der Rotationssymmetrie. Eine Schnittebene 125 teilt den Kegelstumpf 120 und die Kuppe 130 in zwei gleich dimensionierte Hälften. Grundfläche 180 und Deckfläche 190 des Kegelstumpfs 120 schneiden die Ebene 125 im rechten Winkel. Die Mittenachse 127 liegt in der Ebene 125. Die beiden Kegelstumpfhälften sind mit 121 und 122 bezeichnet, sie liegen (in der Zeichnung) also ober- bzw. unterhalb der Ebene 125. Dort wo die Ebene 125 die Mantelfläche des Kegelstumpfs 120 schneidet, liegen somit zwei Trennlinien 175, 176 zwischen den beiden Kegelstumpfhälften 121 und 122. In der Zeichnung mit 171 und 172 bezeichnet sind die an diese Trennlinien 175, 176 anschliessenden, sogenannten Übergangsstreifen. Sie markieren einen Grenzbereich, der jeweils teilweise in der Mantelfläche der ersten Kegelstumpfhälfte 121 und der zweiten Kegelstumpfhälfte 122 liegt. Aus der Logik der Geometrie folgt, dass es somit pro Kegelstumpf 120 zwei Übergangsstreifen 171, 172 gibt.

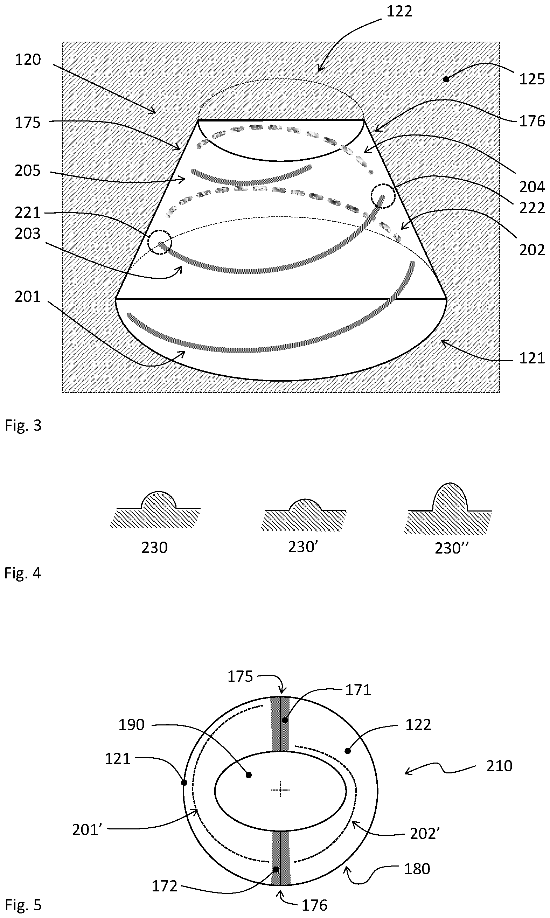

Figur 3 zeigt in einer perspektivische Schrägansicht von oben einen Kegelstumpf 120, der durch eine Schnittebene 125 in zwei gleich dimensionierte Kegelschnitthälften 121 (in der Zeichnung vordere Hälfte) und 122 (hintere Hälfte) geteilt wird. Ein Gewindegang erstreckt sich auf der Mantelfläche des Kegelstumpfs 120, ausgehend von der unteren Basisfläche in Richtung der Deckfläche. Der Gewindegang wird erfindungsgemäss gebildet aus einzelnen Abschnitten bzw. Rippen, die auf einer gemeinsamen virtuellen helikalen Kurve liegen. In Figur 3 ist die Reihenfolge der Abschnitte / Rippen auf der virtuellen helikalen Kurve daher 201 - 202 - 203 - 204 - 205. Das Muster bzw. die Struktur dieser Abschnitte / Rippen bilden das Relief bzw. die Reliefstruktur, die auf der Mantelfläche des Kegelstumpfs angeordnet ist. Dabei liegen die ungeradzahligen Gewindegang-Abschnitte in der vorderen Kegelstumpfhälfte 121, die geradzahligen auf der hinteren Kegelstumpfhälfte 122. Die Bereiche, wo kein Gewindegang ausgeprägt ist, entsprechen den Übergangsbereichen 171, 172 aus Figur 2 und sind aus Übersichtsgründen hier nicht markiert. Die Trennlinien 175, 176 sind jedoch eingezeichnet. Ein- und Auslauf eines Abschnitts bzw. einer Rippe ist mit 221 bzw. 222 exemplarisch für die Rippe 203 gekennzeichnet. Die Zahl der Gewindegang-Abschnitte wird je nach Dimensionierung der Schraube und der Steigung des Gewindeganges variieren. Je nach Auslegung sind auch doppelgängige oder mehrgängige Gewindegänge nicht ausgeschlossen.
Figur 4 zeigt exemplarisch drei Varianten, wie die Rippen 201...205 im Querschnitt ausgeführt werden können. Querschnitt 230 lässt sich mit einem Kugelfräser im Werkzeug zur Herstellung des gezeigten Spitzendesigns realisieren. Der kuppelförmige Querschnitt würde in dem Fall durch eine halbrunde Rille im Werkzeug erzeugt. 230' lässt sich realisieren, wenn der Kugelfräser nur flach eintaucht. 230" liesse sich mit einem elliptischen Fräser in der Werkzeugform herstellen. Die Darstellung in Figur 4 ist schematisch und exemplarisch, weitere Varianten sind vorstellbar - die Umsetzbarkeit wird nicht zuletzt durch die Umformbarkeit des Metalls in das Werkzeug und die Werkzeuggeometrie festgelegt, die durch Versuche ermittelt werden müssen.
Figur 5 zeigt eine senkrechte Draufsicht auf die Deckfläche 190 und die angrenzende Mantelfläche einer Variante eines irregulären Kegels 210. In der gezeigten Ausführungsform ist die Grundfläche 180 kreisförmig, aber die Deckfläche 220 elliptisch ausgelegt ist. Vorteile bietet diese Auslegung, wenn die Übergangsstreifen 171, 172 zwischen den beiden Kegelstumpfhälften 121 bzw. 122 mit den Trennlinien 175, 176 so angeordnet werden, dass sie von einer Ebene geschnitten werden, deren Orientierung durch die kurzen Halbachsen der (hier elliptischen) Deckfläche 190 definiert wird. Zur Orientierung ist lediglich ein zweigeteilter Gewindegang 201', 202' in Figur 5 schematisch gestrichelt angedeutet.

## Patentansprüche

1. Eine selbstbohrende, gewindefurchende Schraube (100) aus Edelstahlmaterial, umfassend folgende, ineinander übergehende bzw. aneinander angrenzende Funktionsabschnitte:
- Eine Schraubenspitze (110), umfassend einen Kegelstumpf (120) mit abschliessender Kuppe (130);
- Einen im Wesentlichen zylindrischen, zumindest abschnittsweise ein Gewinde (140) tragenden Schaft (150); und
- Einen Kopf (160) mit einem Kraftangriff
**dadurch gekennzeichnet, dass**
auf dem Mantel des Kegelstumpfs (120) eine gewindeähnliche Reliefstruktur aus längsausgedehnten, bogenförmigen Rippen (201, ...205) angeordnet ist, wobei die Rippen (201, ...205)
- in Längsrichtung betrachtet hintereinander, aber
- voneinander beabstandet vorliegen und
- einer virtuellen helikalen Kurve folgen.

2. Schraube (100) nach Anspruch 1, **dadurch gekennzeichnet, dass** die bogenförmigen Rippen (201, ... 205) auf der Mantelfläche je einer Kegelstumpfhälfte (121, 122) so angeordnet sind, dass die rippenfreien Bereiche in zwei Übergangsstreifen (170, 172) vorliegen, die
- um 180° versetzt auf der Mantelfläche des Kegelstumpfs (120) angeordnet sind und
- sich zu beiden Seiten der Trennlinie zwischen den Kegelstumpfhälften (121, 122) erstrecken.

3. Schraube (100) nach Anspruch 2, **dadurch gekennzeichnet, dass** die bogenförmigen Rippen (201, ... 205) in Richtung auf den Übergangsstreifen (171, 172) jeweils einen Ein- bzw. Auslauf (221, 222) aufweisen, wo die Höhe der Rippen gegenüber der Mantelfläche des Konus auf Null zurückgeht.

4. Schraube (100) nach Anspruch 1-3, **dadurch gekennzeichnet, dass** die Reliefstruktur der bogenförmigen Rippen (201, ... 205) auf der Kuppe (130) weitergeführt wird bzw. ausläuft.

5. Schraube (100) nach Anspruch 1-4, **dadurch gekennzeichnet, dass** der Querschnitt aller Rippen (201, ...205) mit Ausnahme der Ein- bzw. Ausläufe (221, 222) kuppelförmig mit gleichbleibender Höhe relativ zur Mantelfläche des Kegelstumpf (120) gestaltet ist.

6. Schraube (100) nach Anspruch 1-5, **dadurch gekennzeichnet, dass** die Steigung der virtuellen helikalen Kurve auf dem Kegelstumpf (120) konstant ist.

7. Schraube (100) nach Anspruch 1-6, **dadurch gekennzeichnet, dass** die Steigung der virtuellen helikalen Kurve auf dem Kegelstumpf (120) der Steigung des Gewindes (120) auf dem Schaft (150) entspricht.

8. Schraube (100) nach Anspruch 3-7, **dadurch gekennzeichnet, dass** die Breite der Rippen (201, ... 205) mit Ausnahme der Ein- bzw. Ausläufe (221, 222) am Übergang zur Mantelfläche zwischen 0.3 bis 0.6mm beträgt.

9. Schraube (100) nach Anspruch 3-8, **dadurch gekennzeichnet, dass** die Höhe der Rippen (201, ... 205) mit Ausnahme der Ein- bzw. Ausläufe (221, 222) bezogen auf die Mantelfläche zwischen 0.15 bis 0.3 mm beträgt.

10. Schraube (100) nach Anspruch 3-9, **dadurch gekennzeichnet, dass** die Rippen so angeordnet sind, dass der Winkel zwischen Ein-bzw. Auslauf (221, 222), bezogen auf die Mittenachse (127) des Kegelstumpfs (120) zwischen 100° und 170° beträgt.

11. Schraube (100) nach Anspruch 1-10, **dadurch gekennzeichnet, dass** auf dem Mantel des Kegelstumpfs (120) zwei oder mehr gewindeähnliche Reliefstrukturen mit separaten, virtuellen helikalen Kurven angelegt sind in der Art eines doppel- bzw. mehrgängigen Gewindes.

12. Schraube (100) nach Anspruch 1-11, **dadurch gekennzeichnet, dass** die Kuppe (130) ein den Kegelstumpf (120) abschliessende, einem Kugelsegment ähnliche Form aufweist.

13. Schraube (100) nach Anspruch 12, **dadurch gekennzeichnet, dass** der Radius der Kuppe 0.3 bis 0.5mm beträgt.

14. Schraube (100) nach Anspruch 1-13, **dadurch gekennzeichnet, dass** der Kegelstumpf (120) irregulär ausgebildet ist, mit
(a) einer kreisförmigen Grundfläche (180), die in eine elliptische Deckfläche (190) übergeht oder
(b) einer kreisförmige Grundfläche (180), die in eine Ellipsenform übergeht und wieder zurück in eine kreisförmige Deckfläche (190);
wobei in beiden Fällen (a) und (b) die Schnittebene (125) zwischen den beiden Kegelstumpfhälften so gewählt ist, dass sie die kurzen Halbachsen der Ellipse einschliesst.

15. Schraube (100) nach Anspruch 5, **dadurch gekennzeichnet, dass** der Querschnitt der Rippen (201, ...205) im Wesentlichen einen Halbkreis, ein Kreissegment bzw. einen Teil einer Ellipse bildet.

16. Verfahren zur Herstellung einer Schraube (100) nach Anspruch 1-15, vollständig aus einem Edelstahlmaterial, wobei die Schraube (100) keinen dem Herstellprozess nachgelagerten, die Materialhärte verbessernden Wärmebehandlungsprozess durchläuft,
**mit folgenden Schritten**
A. Bereitstellen eines schaftförmigen Rohlings als Drahtabschnitt aus einem Edelstahlmaterial;
B. Aufstauchen eines Schraubenkopfs (160) mittels Kaltumformung an einem ersten Längsende des Rohlings;
C. Formen einer Schraubenspitze (110) am zweiten Längsende des Rohlings, wobei die Schraubenspitze (110) einen Kegelstumpf (120) mit abschliessender Kuppe (130) umfasst und eine gewindeähnliche Reliefstruktur aus längsausgedehnten, bogenförmigen Rippen (201, ...205) auf dem Kegelstumpf (120) aufweist, wobei diese Form durch eine quer zur Längsachse erfolgende Zwickbewegung zwischen zwei gegenüberliegenden Werkzeugbacken erreicht wird;
D. Abscheren von an der Schraubenspitze (110) verbliebenen, überstehenden Materialfahnen während eines nachfolgenden Gewinderollvorgangs auf dem Schaft (150).

17. Verfahren nach Anspruch 16, **dadurch gekennzeichnet, dass** vor Schritt C ein Vorformen einer im Wesentlichen kegelförmigen Spitze am zweiten Längsende des Rohlings durch eine quer zur Längsachse erfolgende Zwickbewegung zwischen zwei gegenüberliegenden Werkzeugbacken erfolgt.

18. Verfahren nach Anspruch 16-17, **dadurch gekennzeichnet, dass** zwischen dem Vorformen nach Anspruch 18 und dem Verfahrensschritt Schritt C ein Abkühlen des Rohlings erfolgt.

19. Verfahren nach Anspruch 16-18, **dadurch gekennzeichnet, dass** das Edelstahlmaterial ein Edelstahl ausgewählt aus den Normen 1.4301, 1.4551 oder 1.4307 (V2A), bzw. 1.4401, 1.4571 oder 1.4404 (V4A) oder 1.4462, 1.4362, 1.4410 oder 1.4501 (Duplex) ist.
